# EUROPÄISCHE PATENTANMELDUNG

(11) **EP 1 988 400 A2**
(43) Veröffentlichungstag der Anmeldung: **05.11.2008**
(21) Anmeldenummer: 08007897.5
(22) Anmeldetag: 24.04.2008
(51) Int. Cl.: G01P 3/488

(54) **Geberrad, vorzugsweise für Wellen, sowie Verfahren zur Herstellung eines solchen Geberrades**

(30) Priorität: 02.05.2007 DE 102007021421
(71) Anmelder: KACO GmbH + Co. KG, 74072 Heilbronn (DE)
(72) Erfinder: Brokelmann, Thomas, 74196 Neuenstadt (DE)
(74) Vertreter: Jackisch-Kohl, Anna-Katharina

(57) **Zusammenfassung**

Geberräder werden zusammen mit Sensoren zur Messung von Drehzahlen und Winkelpositionen unter anderem in Motoren eingesetzt. Die Geberräder haben einen Mantel, der mit über den Umfang verteilt angeordneten Fenstern (6) versehen ist. Um eine einfache Fertigung mit hoher Präzision zu erreichen, sind die Fenster (6) nach außen durch einen Ring (9) geschlossen, der von in Umfangsrichtung verlaufenden Abschnitten (5, 13) von voneinander getrennten Profilteilen (3, 12) gebildet ist. Zur Bildung der Fenster (6) werden am Umfang eines runden Bleches Profilteile (3, 12) gestanzt, die in Umfangsrichtung verlaufende Profilabschnitte (5, 13) aufweisen. Sie haben zunächst Abstand voneinander und werden nach dem Stanzen aufgestellt, wobei die Profilabschnitte (5, 13) einen umlaufenden äußeren Ring (9) bilden. Das Geberrad wird zur Überwachung von Drehzahlen und/oder Winkelpositionen und Ähnlichem von Wellen eingesetzt.

## Beschreibung

Die Erfindung betrifft ein Geberrad, vorzugsweise für Wellen, nach dem Oberbegriff des Anspruches 1 und ein Verfahren zur Herstellung eines solchen Geberrades nach dem Oberbegriff des Anspruches 7.

Geberräder werden zusammen mit Sensoren zur Messung von Drehzahlen und Winkelpositionen unter anderem in Motoren eingesetzt. Die Geberräder haben einen zylindrischen Mantel mit Aussparungen.

Durch die drehfeste Verbindung mit der Welle werden die Aussparungen bei der Rotation der Welle an einem Sensor vorbeibewegt, was zu einer Änderung des Magnetflusses des im Sensor untergebrachten Magneten führt. Diese Veränderungen werden von einer Messzelle im Sensor erfasst und in entsprechende elektrische Impulse umgewandelt.

Es sind Geberräder bekannt, deren zylindrischer Mantel wellenförmig profiliert ist. Dieses Wellenprofil führt zu einer robusten Ausbildung des Geberrades. Nachteilig ist allerdings die damit verbundene Ungenauigkeit bei der Messung. Je nach maximal zulässigem Außendurchmesser kann es auch zu Konflikten mit der Passbohrung kommen, die auf der Bodenseite eingebracht ist.

Es sind weiter Geberräder bekannt, bei denen der Mantel durch mit Abstand nebeneinander liegende Finger gebildet wird. Zwischen den Fingern werden die in Achsrichtung offenen Fenster gebildet. Dieses Fingerprofil weist gegenüber dem Wellenprofil eine höhere Präzision auf. Das Geberrad ist allerdings wegen der einzelnen Finger nach der Herstellung sehr empfindlich gegenüber mechanischen Beschädigungen bzw. Deformation. Die Finger sind verhältnismäßig schmal und können dadurch leicht verbogen werden, so dass die Messgenauigkeit beeinträchtigt ist.

Es sind schließlich Geberräder bekannt, bei denen der zylindrische Mantel Fenster aufweist, die als rechteckige Aussparungen im Mantel vorgesehen sind. Im Unterschied zum Fingerprofil sind die Fenster in Axialrichtung nach außen durch einen umlaufenden Ring geschlossen. Er führt zu einer Stabilisierung des Geberrades. Die zwischen den Fenstern befindlichen Stege sind vor einer Deformation weitgehend geschützt. Allerdings ist die Herstellung des Fensterprofiles nur mit großem Aufwand erforderlich. Auch die für Geberräder geforderte Präzision ist nur schwierig zu erreichen. Ein weiteres Problem besteht darin, dass die Fenster zunächst in einem flachen Blechteil gestanzt werden. Der die Fenster enthaltende Randbereich muss dann aufgerichtet werden. Bei diesem Aufrichtvorgang wird allerdings der Durchmesser des die Fenster nach außen schließenden Ringes verkleinert, wodurch es zu Materialverdrängungen kommt. Dies hat zur Folge, dass dieser äußere Ring ungleichmäßig ausgebildet ist, was die Genauigkeit der Messung mit Hilfe dieses Geberrades beeinträchtigt.

Der Erfindung liegt die Aufgabe zugrunde, das gattungsgemäße Geberrad und das gattungsgemäße Verfahren so auszubilden, dass bei einfacher Fertigung das Geberrad mit hoher Präzision hergestellt werden kann.

Diese Aufgabe wird beim gattungsgemäßen Geberrad erfindungsgemäß mit den kennzeichnenden Merkmalen des Anspruches 1 und beim gattungsgemäßen Verfahren erfindungsgemäß mit den kennzeichnenden Merkmalen des Anspruches 7 gelöst.

Beim erfindungsgemäßen Geberrad werden die Fenster durch voneinander getrennte Profilteile begrenzt. Sie haben die in Umfangsrichtung verlaufenden Abschnitte, die den äußeren Ring bilden. Die einzelnen Profilteile lassen sich problemlos nach dem Stanzvorgang zur Bildung des Mantels aufrichten.

Da die Profilteile voneinander getrennt sind, sind auch ihre in Umfangsrichtung verlaufenden Profilabschnitte voneinander getrennt. Die Profilabschnitte sind so lang, dass sie im flachen Blech nach dem Stanzvorgang Abstand voneinander haben. Werden die Profilteile aufgerichtet, dann liegen ihre Profilabschnitte aneinander, wodurch der äußere, im wesentlichen geschlossene Ring gebildet wird. Eine Materialverdrängung, wie sie bei einem geschlossenen durchgehenden Ring auftritt, wird vermieden, so dass der äußere Ring nach dem Aufrichten der Profilteile eine im wesentlichen gleichmäßige runde Form hat.

Beim erfindungsgemäßen Verfahren werden zunächst die Fenster am Umfang des flachen Bleches dadurch gebildet, dass Profilteile am Blechrand gestanzt werden. Sie sind so gestaltet, dass ihre in Umfangsrichtung des Blechrandes verlaufenden Profilabschnitte Abstand voneinander haben. Dieser Abstand ist so gewählt, dass die Profilabschnitte nach dem Aufrichten der Profilteile den umlaufenden äußeren Ring bilden. Mit dieser Verfahrensweise lassen sich Geberräder mit hoher Präzision bei einfachster Fertigung problemlos herstellen. Die Fenster bzw. die Profilteile können unterschiedlichste Formen und/oder unterschiedlichen Abstand voneinander haben. So können beispielsweise unterschiedliche Formen der Profilteile vorgesehen werden.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigen
- Fig. 1: ein gestanztes Blech zur Herstellung eines Geberrades,
- Fig. 2: in perspektivischer Darstellung das aus dem gestanzten Blech gemäß Fig. 1 hergestellte Geberrad,
- Fig. 3: die Einzelheit X in Fig. 2 in vergrößerter Darstellung,
- Fig. 4 bis Fig. 6: in Darstellungen entsprechend den Fig. 1 bis 3 eine zweite Ausführungsform eines Geberrades.

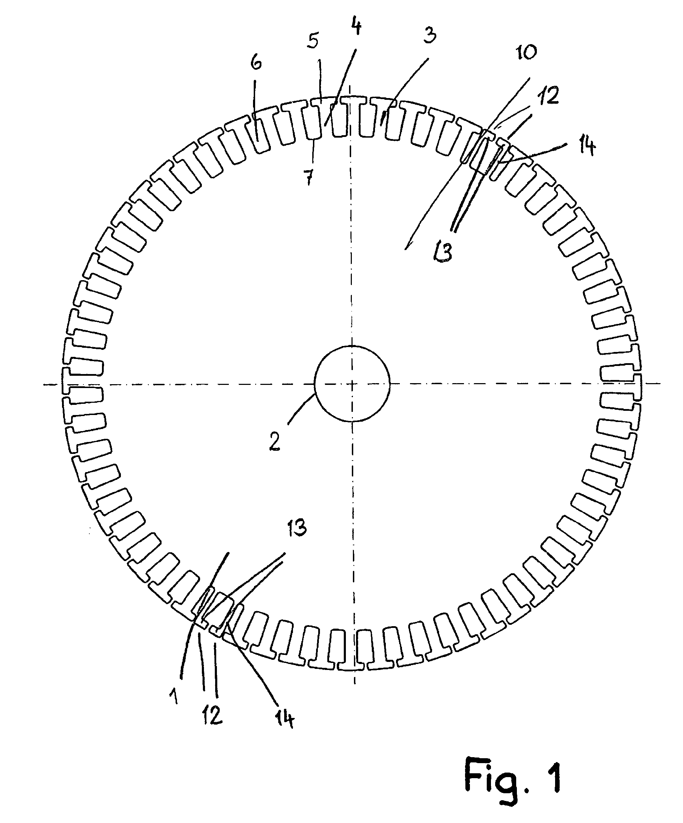

Um Drehzahlen und/oder Winkelpositionen und Ähnliches von Wellen zu überwachen, werden Geberräder eingesetzt, die vorteilhaft aus ferromagnetischem Material bestehen. Bei der Ausführungsform gemäß den Fig. 1 bis 3 wird als Ausgangsmaterial für ein ferromagnetisches Geberrad ein ferromagnetisches Blech 1 verwendet, das zunächst kreisförmigen Umriss hat. Dieses Blech wird beispielsweise mittels eines Folgewerkzeuges in eine Stanzpresse aus einem Blechband gestanzt. Das Blech 1 ist mittig mit einer kreisförmigen Öffnung 2 versehen. Am äußeren Umfang des Bleches 1 wird eine Stanzung in der Weise vorgenommen, dass T-förmige Abschnitte 3 gebildet werden, deren Füße 4 radial vom Grundkörper des Bleches 1 abstehen und am freien Ende die senkrecht zu ihnen liegenden Stege 5 aufweisen. Die T-Abschnitte 3 sind gleich ausgebildet und in gleichmäßigen Abständen längs des Umfanges des flachen Bleches 1 angeordnet. Die Stege 5 benachbarter T-Abschnitte 3 haben im flachen Blech 1 Abstand voneinander. Zwischen den Füßen 4 der T-Abschnitte werden etwa rechteckförmige Fenster 6 gebildet, die radial nach innen vom Grundkörper des Bleches 1 und radial nach außen durch die Stege 5 begrenzt sind.

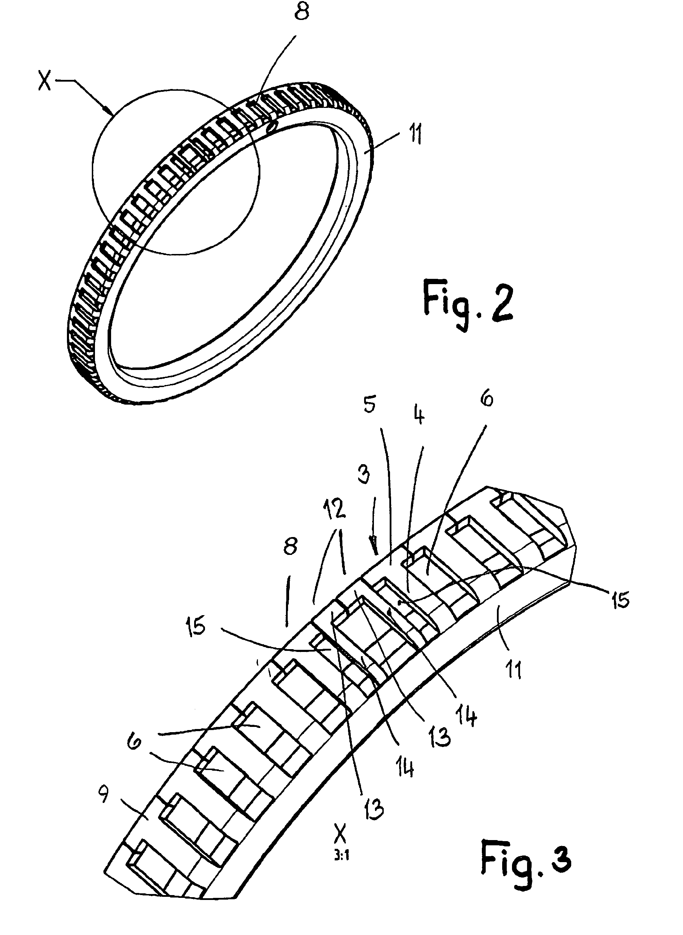

Zur Herstellung des Geberrades werden die T-Abschnitte 3 etwa an der Wurzel 7 der Füße 4 rechtwinklig abgebogen. Dadurch wird ein umlaufender zylindrischer Mantel 8 gebildet (Fig. 2 und 3), der über seinen Umfang gleichmäßig verteilt die Fenster 6 aufweist. Aufgrund des Biegevorganges der T-Abschnitte 3 berühren die Stege 5 benachbarter T-Abschnitte 3 einander (Fig. 3), wodurch ein durchgehender Rand 9 gebildet wird, der dem Geberrad bzw. dessen Mantel 8 eine ausreichende Steifigkeit und Stabilisierung verleiht. Aus dem Blechgrundkörper wird anschließend der zentrale Bereich 10 (Fig. 1) so weit ausgestanzt, dass nur noch ein schmaler Ring 11 übrigbleibt, der in einer Radialebene des Geberrades liegt. Dieser zentrale Bereich 10 kann nach dem Hochstellen der T-Abschnitte 3, aber auch schon aus dem flachen Blech 1 entsprechend Fig. 1 herausgestanzt werden.

Mit dem beschriebenen Verfahren lassen sich in einfacher Weise die Fenster 6 bzw. die die Zähne des Geberrades bildenden T-Abschnitte 3 einfach herstellen. Über den Umfang des Bleches 1 können die Profilabschnitte auch unterschiedlich gestaltet sein und/oder auch unterschiedlichen Abstand voneinander haben. In Fig. 1 ist beispielhaft dargestellt, dass an zwei diametral einander gegenüberliegenden Stellen anstelle der T-Abschnitte 3 jeweils zwei L-Abschnitte 12 vorgesehen sind, deren kurze Schenkel 13 gegeneinander gerichtet sind. Die radial vom Grundkörper des Bleches 1 abstehenden längeren Schenkel 14 verlaufen radial. Die kurzen Schenkel 13 haben einen solchen Abstand voneinander, dass sie, wenn die L-Abschnitte 12 hochgestellt worden sind, einander berühren. Auch die radial verlaufenden längeren Schenkel 14 haben einen solchen Abstand vom Steg 5 des jeweils benachbarten T-Abschnittes 3, dass die Schenkel 14 in hochgestellter Lage an ihrem freien Ende an dem benachbarten Ende des Steges 5 des entsprechenden T-Abschnittes anliegen (Fig. 3). Die kurzen Schenkel 13 liegen auf gleicher Höhe wie die Stege 5 der T-Abschnitte 3. Die langen Schenkel 14 der L-Abschnitte 12 bilden mit den benachbarten Füßen 4 der T-Abschnitte 3 Fenster 15, die gleiche radiale Länge wie die Fenster 6 haben, jedoch in Umfangsrichtung wesentlich schmaler als diese sind.

Auf diese Weise können im Mantel 8 des Geberrades unterschiedlich gestaltete Fenster und/oder Zähne vorgesehen sein, je nach Anwendungs- und Einsatzfall des Geberrades. Die unterschiedlich gestalteten Zähne können zum Beispiel auch für Indexnuten eingesetzt werden.

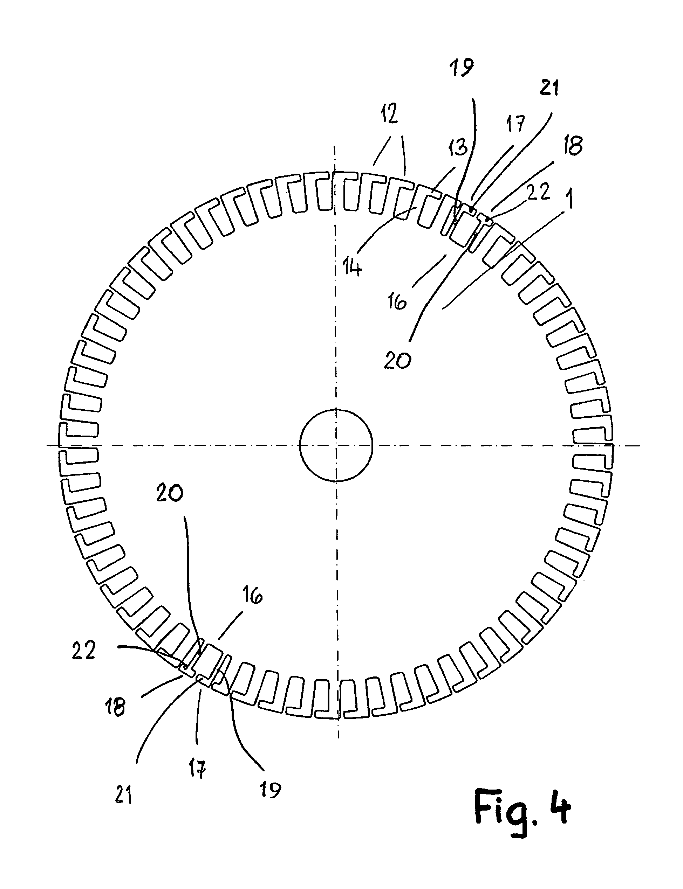

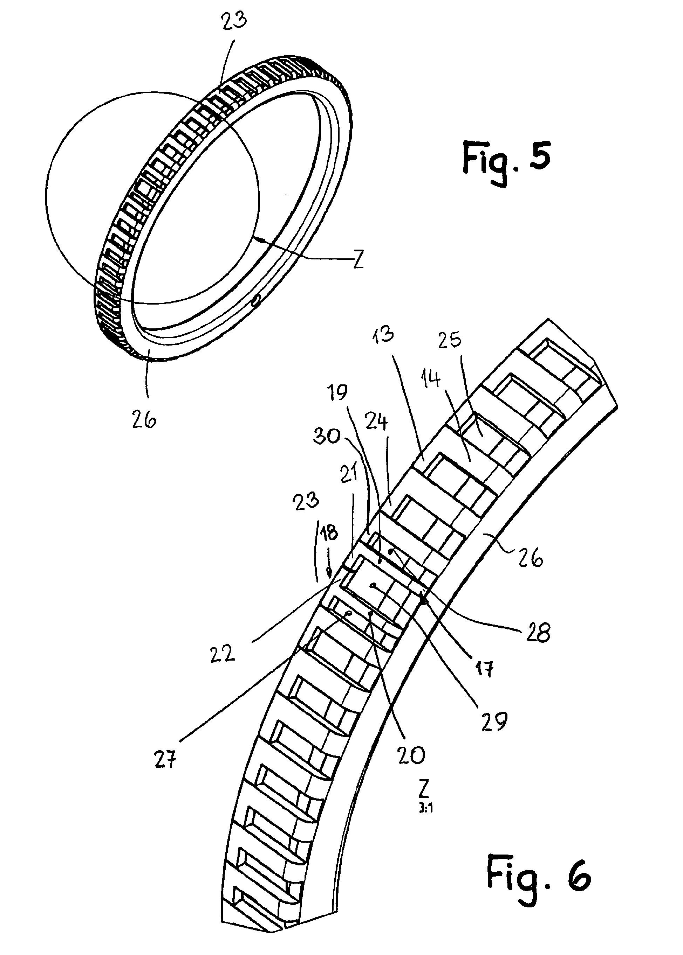

Beim Ausführungsbeispiel nach den Fig. 4 bis 6 werden am Rand des ringförmigen flachen Bleches 1 L-Abschnitte 12 gestanzt, deren kurze Schenkel 13 jeweils in die gleiche Richtung weisen. An zwei diametral einander gegenüberliegenden Stellen sind anders gestaltete Formteile vorgesehen. An den Stellen 16 liegen ein L-Abschnitt 17 und ein T-Abschnitt 18 einander gegenüber. Der L-Abschnitt 17 hat einen radial verlaufenden Schenkel 19, der schmaler ist als der lange Schenkel 14 der L-Abschnitte 12. Die T-Abschnitte 18 haben einen schmalen Fuß 20, der etwa gleich breit wie der Schenkel 19 ist. Der kurze Schenkel 21 des L-Abschnittes 17 liegt dem Steg 22 des T-Abschnittes 18 mit Abstand gegenüber. Die übrigen L-Abschnitte 12 am Umfang des flachen Bleches 1 sind untereinander gleich ausgebildet. Entsprechend der vorigen Ausführungsform werden die Profilabschnitte um 90° aufgerichtet, wodurch ein zylindrischer Mantel 23 gebildet wird. Beim Aufrichtvorgang wird der Abstand zwischen den Schenkeln 13, 21 und den Stegen 22 auf Null verringert, so dass sie aneinander liegen. Auf diese Weise erhält der Mantel 23 einen umlaufenden geschlossenen Rand 24, der dem Geberrad eine hohe Steifigkeit und Stabilität verleiht. Benachbarte L-Abschnitte 12 begrenzen rechteckige Fenster 25, die radial nach innen durch einen Ring 26 (Fig. 5 und 6), radial nach außen durch die Schenkel 13, 21 und die Stege 22 der verschiedenen Abschnitte 12, 17 und 18 und in Umfangsrichtung durch die langen Schenkel 14 der L-Abschnitte 12 begrenzt werden.

Im Bereich der L-Abschnitte 17 und T-Abschnitte 18 sind Fenster 27 bis 29 vorgesehen, von denen die Fenster 27, 28 in Umfangsrichtung gleich breit, jedoch schmaler als die Fenster 25 sind. Das Fenster 27 wird radial nach innen durch den Ring 26 und radial nach außen durch einen Teil des Steges 22 T-Abschnittes 18 begrenzt. Das Fenster 28 wird radial nach innen ebenfalls durch den Ring 26, radial nach außen durch einen kurzen Schenkel 30 begrenzt, der kürzer als der Schenkel 13 der L-Abschnitte 12 ist. Das Fenster 29 schließlich wird radial nach innen durch den Ring 26 und radial nach außen durch den einen Teil des Steges 22 des T-Abschnittes 18 und den kurzen Schenkel 21 des L-Abschnittes 17 begrenzt. In Umfangsrichtung werden sämtliche Fenster durch die jeweiligen, in Radialrichtung verlaufenden Schenkel 14, 19 und die Füße 20 der L-Abschnitte 12, 17 und der T-Abschnitte 18 begrenzt.

Wie schon bei der vorigen Ausführungsform kann zur Bildung des Ringes 26 das flache Blech 1 entsprechend ausgestanzt werden. Es ist aber auch möglich, diesen Stanzvorgang erst dann vorzunehmen, wenn die randseitigen Profilteile um 90° aufgerichtet sind.

Auch bei dieser Ausführungsform können die Zähne über den Umfang des Geberrades unterschiedliche Formgebungen und/oder Abstände voneinander haben. Die Zähne können hierbei innerhalb des zylindrischen Mantels 23 untereinander ungleich gestaltet sein.

Die anhand der Fig. 1 bis 6 beschriebenen Ausbildungen der Zähne des Geberrades und die zwischen ihnen befindlichen Fenster sind beispielhaft zu verstehen. Sie können abweichend von den dargestellten Ausführungsbeispielen unterschiedlichste Gestaltungen bzw. Formgebungen haben.

Bei sämtlichen beschriebenen Ausführungsformen haben die Formteile nach dem Stanzvorgang des ebenen Bleches 1 Abstand voneinander. Beim Aufrichten zur Bildung des zylindrischen Mantels 8, 23 wird dieser Abstand so überbrückt, dass die Schenkel bzw. Stege zur Bildung eines geschlossenen Randes 9, 24 aneinander liegen. Die Profilteile 3, 12, 17, 18 können mit hoher Präzision einfach hergestellt werden. Da die Profilteile nach dem Stanzen im flachen Blech 1 Abstand voneinander haben, lassen sie sich problemlos um 90° aufstellen. Dadurch kann bezüglich der Maßhaltigkeit ein sehr genauer zylindrischer Mantel 8, 23 hergestellt werden. Der Rand 9, 24, der einen Stabilisierungsring bildet, ist nach dem Hochstellen der Profilteile gleichmäßig ausgebildet und hat einen konstanten Durchmesser.

Das Geberrad wird zum Beispiel drehfest mit einer Welle verbunden. Die Fenster 6, 15, 25, 27 bis 29 bewegen sich bei der Rotation der Welle an einem Sensor vorbei, wodurch es zu Änderungen des Magnetflusses eines im Sensor untergebrachten Magneten kommt. Die Veränderungen werden von einer Messzelle im Sensor erfasst und in entsprechende elektrische Impulse umgewandelt. Aus ihnen lässt sich dann die Drehzahl und/oder die Winkelposition der Welle genau erfassen. Ein Einsatzfall solcher Geberräder sind beispielsweise Dichtsysteme zur Erfassung der Kurbelwellendrehzahl und - position von Fahrzeugen.

## Patentansprüche

1. Geberrad, vorzugsweise für Wellen, mit einem Mantel, der mit Fenstern versehen ist, die über den Umfang des Mantels verteilt angeordnet und radial nach außen durch einen Ring geschlossen sind,
**dadurch gekennzeichnet, dass** der Ring (9; 24) durch in Umfangsrichtung verlaufende Abschnitte (5, 13; 13, 21, 22, 30) von voneinander getrennten Profilteilen (3, 12, 17, 18) gebildet ist.

2. Geberrad nach Anspruch 1,
**dadurch gekennzeichnet, dass** die Abschnitte (5, 13; 13, 21, 22, 30) mit ihren freien Enden am jeweils benachbarten Abschnitt bzw. Profilteil (3, 12, 17, 18) anliegen.

3. Geberrad nach Anspruch 1 oder 2,
**dadurch gekennzeichnet, dass** die Profilteile (3, 18) T-Form haben.

4. Geberrad nach Anspruch 1 oder 2,
**dadurch gekennzeichnet, dass** die Profilteile (12, 17) L-Form haben.

5. Geberrad nach einem der Ansprüche 1 bis 4,
**dadurch gekennzeichnet, dass** die Profilteile (3, 12, 17, 18) innerhalb des Mantels (8, 23) gleiche Form und/oder gleichen Abstand voneinander haben.

6. Geberrad nach einem der Ansprüche 1 bis 4,
**dadurch gekennzeichnet, dass** innerhalb des Mantels (8, 23) unterschiedlich gestaltete und/oder unterschiedlichen Abstand voneinander aufweisende Profilteile (3, 12, 17, 18) vorgesehen sind.

7. Verfahren zur Herstellung eines Geberrades nach einem der Ansprüche 1 bis 6, bei dem aus einem runden Blech am Umfang Fenster ausgestanzt werden und der die Fenster aufweisende Randbereich des Bleches aufgestellt wird,
**dadurch gekennzeichnet, dass** zur Bildung der Fenster (6, 15, 25, 27) bis 29) am Umfang des Bleches (1) wenigstens einen in Umfangsrichtung verlaufenden Profilabschnitt (5, 13, 21, 22) aufweisende Profilteile (3, 12, 17, 18) gestanzt werden, deren Profilabschnitte Abstand voneinander haben, und dass die Profilteile (3, 12, 17, 18) anschließend aufgestellt werden, wobei die Profilabschnitte (5, 13, 21, 22) einen umlaufenden äußeren Ring (9, 24) bilden.

8. Verfahren nach Anspruch 7,
**dadurch gekennzeichnet, dass** die Profilabschnitte (5, 13, 21, 22) mit ihren Stirnseiten am jeweils benachbarten Profilabschnitt bzw. Profilteil (3, 12, 17, 18) anliegen.
